# EUROPÄISCHE PATENTSCHRIFT

(11) **EP 0 515 928 B1**
(45) Veröffentlichungstag und Bekanntmachung des Hinweises auf die Patenterteilung: **31.07.1996**
(21) Anmeldenummer: 92108260.8
(22) Anmeldetag: 15.05.1992
(51) Int. Cl.: C09C 3/10, C09C 1/36, C09C 1/30

(54) **Oberflächenmodifizierte plättchenförmige Pigmente mit verbessertem Aufrührverhalten**
Surface-modified plate-shaped pigments with improved mixing behaviour
Pigments sous forme de paillettes à surface modifiée et à aptitude au mélange améliorée

(30) Priorität: 28.05.1991 DE 4117502
(43) Veröffentlichungstag der Anmeldung: 02.12.1992
(73) Patentinhaber: MERCK PATENT GmbH, D-64271 Darmstadt (DE)
(72) Erfinder: Herget, Gerhard, Dr., W-6105 Ober-Ramstadt (DE); Delp, Tanja, W-6100 Darmstadt (DE)

(56) Entgegenhaltungen:
- FR-A- 1 427 492
- WPI, Woche 7341, Derwent Publications Ltd., London (GB); ; AN 73-61641U/41
- PATENT ABSTRACTS OF JAPAN, Band 014, Nr. 017 (C-675), 16. Januar 1990
- PATENT ABSTRACTS OF JAPAN, Band 008, Nr. 062 (C-215), 23. März 1984

## Beschreibung

Die vorliegende Erfindung betrifft oberflächenmodifizierte plättchenförmige Pigmente mit verbessertem Aufrührverhalten, sowie deren Herstellungsverfahren und Verwendung.

Farben und Druckfarben etc., enthaltend plättchenförmige Pigmente sind insofern problematisch in der Handhabung, als die Pigmente infolge ihrer Größe und ihrer Dichte im Vergleich zum Farbmedium sich leicht absetzen und dann zu einem sehr festen Sedimentkuchen zusammenbacken können. Dies kann in der Praxis grundsätzlich nicht verhindert werden, es sei denn, man hält die Druckfarben in dauernder Bewegung z.B. durch Umrühren oder Umpumpen.

So wurden unter anderem zahlreiche Methoden entwickelt, um das Problem der Handhabung von plättchenförmigen Pigmenten in Farben und Druckfarben zu lösen.

Das Wiederaufrühren kann erleichtert werden, indem man den Beschichtungsmassen wie Farben, Lacken, Druckfarben etc. Additive zusetzt, die entweder eine gezielte Flokkulation (Kartenhauseffekt), ein strukturviskoses und/oder thixotropes Verhalten, eine sterische Abstoßung und/oder eine elektrostatische Abstoßung der Pigmente bewirken.

Die Zugabe von Verdickungsmitteln (Thixotropierungsreagenzien), die in üblichen Fällen das Sedimentieren durch Erhöhung der Viskosität des Farbmediums verhindern (EP-0 198 519, DE-OS-18 05 693), kann bei Druckfarben nur begrenzt angewendet werden, weil für die Verdruckbarkeit der Farbe die Einhaltung eines gewissen, engen Viskositätsbereichs erforderlich ist.

Die Erzeugung von Strukturviskosität an der Pigmentoberfläche durch Zusatz von feinteiligen Kieselgelen oder Bentoniten ist ebenfalls nur begrenzt hilfreich, da der Glanz der Pigmentbeschichtung leiden kann und andererseits Strukturviskosität bei Druckfarben in der Regel unerwünscht ist.

Auf der FR-A-1427492 ist die Beschichtung von Polyacrylaten oder Polymethacrylaten von nicht plättchenförmigen Pigmenten bekannt. In der JP 48-32413 werden anorganische Pigmentkörner mit einem Natriumpolyacrylat behandelt. Die Beschichtung von Metallpimenten mit einem Acrylharz ist aus der JP 01-259069 bekannt. Die Oberflächenmodifizierung von nicht plättchenförmigen Substraten mit einer Polymeremulsion ist Gegenstand der JP 58-215461.

Alle diese Zusätze können außerdem einen negativen Einfluß auf die Qualität der Beschichtung haben. Insbesondere die Brillanz bei Perlglanzpigmenten und die Gleichmäßigkeit der Beschichtung können beeinträchtigt werden. Diese Beeinträchtigungen sind im allgemeinen umso größer, je höher die Einsatzkonzentration der Additive ist.

Es bestand daher die Aufgabe plättchenförmige Pigmente zu finden, die bei Einarbeitung in eine Farbe oder Druckfarbe, die bei herkömmlichen pigmentierten Beschichtungsmassen beobachteten Nachteile nicht oder nur in geringem Umfang zeigen. Die Pigmente sollten darüberhinaus eine breite Verträglichkeit mit den verschiedensten Bindemittelsystemen beibehalten.

Überraschenderweise wurde nun gefunden, daß plättchenförmige Pigmente, welche mit einem Polyacrylat oder Polymethacrylat bzw. deren Salze und ggf. einem Lösemittel bzw. Lösemittelgemisch beschichtet sind, ein wesentlich verbessertes Redispergierverhalten besitzen, ohne daß die anderen Eigenschaften wie Glanz- und Ausdruckverhalten nachteilig beeinflußt werden. Die erfindungsgemäßen oberflächenmodifizierten Pigmente stauben nicht und liegen als frei fließendes Material vor. Die Pigmente zeigen weiterhin eine breite Verträglichkeit mit wäßrigen als auch mit lösemittelhaltigen Druckfarbensystemen.

Gegenstand der Erfindung sind daher oberflächenmodifizierte plättchenförmige Pigmente, die zur Verbesserung des Wiederaufrührverhaltens mit einem Modifizierungsreagenz bestehend aus einem Polyacrylat oder Polymethacrylat bzw. deren wasserlöslichen Salze und gegebenenfalls mit einem Lösungsmittel beschichtet sind.

Die Beschichtung von Pigmenten mit Acrylaten ist bekannt; z.B. werden in der DE 22 15 191 TiO₂ beschichtete Glimmerplättchen mit Methacrylato/chromtrichlorid behandelt. In der JP-OS 61/286 310 werden Pigmente für die Kosmetikzubereitung beschrieben, die mit einem Gemisch bestehend aus Calciumalginat, Calciumpolyacrylat und Magnesiumpolyacrylat beschichtet sind. Die Beschichtung plättchenförmiger Substrate allein mit Polyacrylaten oder Polymethacrylaten bzw. deren wasserlöslichen Salze und ggf. einem Lösemittel bzw. Lösemittelgemisch ist bisher nicht bekannt.

Gegenstand der Erfindung ist somit auch ein Verfahren zur Herstellung oberflächenmodifizierter plättchenförmiger Pigmente, dadurch gekennzeichnet, daß man in einem Mischgefäß plättchenförmige Pigmente unter Rühren mit einem Polyacrylat oder Polymethacrylat bzw. deren wasserlöslichen Salze und ggf. einem Lösemittel bzw. Lösemittelgemisch beschichtet.

Alle bekannten plättchenförmigen Metalle, Metalloxide, Glimmerpigmente und sonstigen plättchenförmigen Substrate können nach dem erfindungsgemäßen Verfahren belegt werden. Beispiele hierfür sind Glimmer, Talkum, Kaolin oder andere vergleichbare Mineralien sowie plättchenförmiges Eisenoxid und Wismutoxychlorid.

Da bei dem Verfahren keine hohen Scherkräfte benötigt werden, ist das Verfahren auch hervorragend zur Beschichtung von Perglanzpigmenten geeignet. Es können alle üblichen Perglanzpigmente verwendet werden, z.B. Glimmerbeschichtungen mit farbigen oder farblosen Metalloxiden, wie TiO₂, Fe₂O₃, SnO₂, Cr₂O₃, ZnO und anderen Metalloxiden, allein oder in Mischung in einer einheitlichen Schicht oder in aufeinanderfolgenden Schichten. Diese Pigmente sind z.B. aus den deutschen Patenten und Patentanmeldungen 14 67 468, 19 59 998, 20 09 566, 22 14 545, 22 15 191, 22 44 298, 23 13 331, 25 22 572, 31 37 808, 31 37 809, 31 51 343, 31 51 354, 31 51 355, 32 11 602 und 32 35 017 bekannt und im Handel erhältlich z.B. unter dem Warenzeichen Iriodin® von der Firma E. Merck, Darmstadt.

Wesentlicher Bestandteil des Modifizierungsreagenzes sind Polyacrylate oder Polymethacrylate bzw. deren wasserlöslichen Salze insbesondere mit Kationen von Natrium, Kalium, Ammonium oder organischen Ammoniumverbindungen. Die Molekulargewichte betragen zwischen 100 und 100 000, vorzugsweise zwischen 400 und 50 000, insbesondere zwischen 800 und 20 000. Die Polyacrylate bzw. Polymethacrylate können verschiedene pigmentaffine Gruppen enthalten, wie z.B. Amin-, Hydroxy-, Carbonyl-, Carboxyl-, Carboxylester-, Sulfon-, Sulfonmethyl-, Ether-, Phenyl-, Phenoxy-, Phosphat- und Amidofunktionen und werden in einer Menge von etwa 0,1 bis 20 Gew.%, insbesondere 0,2 bis 10 Gew.% auf das Pigment aufgebracht.

Das erfindungsgemäße Verfahren ist einfach und läßt sich leicht handhaben. Die verschiedenen Polyacrylate bzw. Polymethacrylate bzw. deren Salze werden nach an sich bekannten Methoden hergestellt, wie sie in der Literatur (z.B. W.R. Sorenson, T.W. Campbell, Präparative Methoden der Polymerchemie, Verlag Chemie, Weinheim 1962; J.A. Moore, Macromolecular Syntheses, Coll. Vol. 1, Wiley & Sons, N.Y., Chichester, Brisbane, Toronto 1978; J. Ulbricht, Grundlagen der Synthese von Polymeren, Akademie Verlag, Berlin 1978) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen. Die in der Literatur genannten Carbonsäuren können gegebenenfalls mit anderen ethylenisch ungesättigten Monomeren copolymerisiert werden. Geeignete Comonomere sind beispielsweise Acrylsäure- und Methacrylsäureester, Dicarbonsäuren, wie Fumarsäure oder Maleinsäure, Halbester oder Diester der genannten Dicarbonsäuren, Acrylnitril, Methacrylnitril, Acrylamid und Methacrylamid. Das Modifizierungsreagenz kann zusätzlich ein Lösungsmittel bzw. Lösungsmittelgemisch enthalten. Die Herstellung des Modifizierungsreagenzes geschieht dann durch Mischen des Polymers mit einem Lösemittel bzw. Lösemittelgemisch. Je nach Art des eingesetzten Modifizierungsreagenzes sind als Lösungsmittel Wasser sowie alle organischen Lösemittel z.B. Ester, Acetate, Alkohole wie Ethanol, Propanol, Isopropanol, 1-Methoxy-2-propanol, tert.-Butanol, sowie aromatische Lösungsmittel z.B. Benzol, Xylol, Toluol geeignet.

Zusätzlich kann das Modifizierungsreagenz auch einen Weichmacher enthalten. Geeignet sind insbesondere Weichmacher, die bei Raumtemperatur flüssig sind, da diese gegebenenfalls im Modifizierungsreagenz das Lösungsmittel ersetzen können. Es können alle üblichen Weichmacher wie z.B. Phthalate, Adipate und Polymerweichmacher in Mengen von 1 bis 100 Gew.%, vorzugsweise 1 bis 70 Gew.%, insbesondere 3 bis 20 Gew.%, bezogen auf das Modifizierungsreagenz, verwendet werden. Als Weichmacher werden z.B. Phthalsäureester mit linearen, verzweigten oder zyklischen Alkoholen nicht 1 bis 12 C-Atomen, Ester der Adipin-, Sebazin- oder Azelainsäure, Fettsäureester, epoxidierte Fettsäuren, Zitronensäureester sowie Weichmacher auf Basis von Phosphorsäure eingesetzt.

Die Konzentration des Polymeren im Lösemittel beträgt in der Regel 5 bis 80 Gew.%, vorzugsweise 10 bis 50 Gew.%.

Die Herstellung der erfindungsgemäßen Pigmente läßt sich wie folgt beschreiben: Die genannten Ausgangspigmente werden in einem Mischgefäß, z.B. einem Taumel-, Flügelrad-, Schaufel-oder Fluidmischer, vorgelegt und unter Rühren mit dem Modifizierungsreagenz versetzt. Anschließend kann ggf. das Lösemittel entfernt werden. Es kann aber auch verbleiben, wenn eine nicht staubende Präparation gewünscht wird.

Die erfindungsgemäßen Pigmente sind mit einer Vielzahl von Farbsystemen kompatibel vorzugsweise aus dem Bereich der Lacke, Farben und Druckfarben.

Gegenstand der Erfindung ist somit auch die Verwendung der beschichteten Pigmente in Formulierungen wie Farben, Druckfarben, Lacken und zur Kosmetikpräparation.

Zur Erläuterung der Erfindung dienen die folgenden Beispiele:

### I. Herstellung des Modifizierungsreagenzes

### Versuch 1a:

In einem 1-l-Rundkolben werden über einen Zeitraum von 6 h 340 g Acrylsäure in 226 g VE-Wasser mit 35 g Wasserstoffperoxid (30 Gew.%) in 30 g VE-Wasser sowie 28 g Thioglycolsäure (80 Gew.%) in 30 g VE-Wasser unter Rückflußtemperatur umgesetzt. Nach vollständiger Zugabe der Komponenten erhitzt man noch eine weitere Stunde unter Rühren und läßt dann abkühlen. Man filtriert den Feststoff ab und löst das Filtergut in einer Mischung aus Butylacetat/2-Butanol (5 : 1). Mit 1-Methoxy-2-propanol wird die Lösung auf 25 Gew.% eingestellt.

### Versuch 1b:

Analog Versuch 1a werden 340 g Acrylsäure zu einer wäßrigen Polyacrylat-Suspension umgesetzt. Durch Zugabe von Natronlauge (30 Gew.%) wird das Polymer vollständig neutralisiert und wasserlöslich. Man enthält eine klare Lösung, die mit VE-Wasser auf 13 Gew.% eingestellt wird.

### II. Pigmentpräparation

### Beispiel 1: Pigmentpräparation mit Polyacrylat

95 g Iriodin® 300 Goldperl (mit Titandioxid und Eisenoxid beschichtetes Glimmerschuppenpigment der Fa. E. Merck, Darmstadt, mit einer Teilchengröße von 10-60 µm) werden vorgelegt. 10 g einer 25 Gew.%igen Lösung des Polyacrylats aus Versuch 1a in 1-Methoxy-2-propanol : Butylat : 2-Butanol (5 : 2,1 : 0,4) werden unter Rühren mit einem Flügelradrührer innerhalb von 15 Minuten zugetropft. Man erhält eine homogen verteilte, nicht staubende Präparation.

### Beispiel 2: Pigmentpräparation mit Natrium-Polyacrylat

96 g Iriodin® 123 Bright Lustre Satin (mit Titandioxid belegtes Glimmerschuppenpigment der Fa. E. Merck, Darmstadt, mit einer Teilchengröße von 5-20 µm) werden vorgelegt. 10 g einer 13 Gew.%igen Lösung des Natrium-Polyacrylats aus Versuch 1b in Wasser werden unter Rühren mit einem Flügelradrührer auf das Pigment getropft. Nach 15 Minuten wird das feuchte Pigment ausgetragen und in dieser nichtstaubenden Form für die unter III beschriebenen Versuche verwendet.

### Beispiel 3:

10 Teile einer 25 Gew.%igen Lösung des Polyacrylats aus Versuch 1a werden mit 10 Teilen Dioctylphthalat gemischt und unter Rühren zu 80 Teilen Iriodin 123 Bright Lustre Satin zugetropft. Man erhält eine homogen verteilte, nicht staubende Präparation.

### Beispiel 4:

Analog Beispiel 3 werden 5 Teile einer 25 Gew.%igen Lösung des Polyacrylats aus Versuch 1a mit 5 Teilen Dioctylphthalat gemischt und unter Rühren zu 90 Teilen Iriodin 123 Bright Lustre Satin zugetropft.

### III.Untersuchung des Absetz- und Redispergierverhaltens von pigmentierten Lacken und Druckfarben

### a) Dorntest

Die pigmentierten Druckfarben bzw. Dispersionslacke werden in 50-ml-Meßzylinder gefüllt. 30 Tage lang wird das Sedimentvolumen bestimmt. Mit einem speziellen Meßdorn wird am 30. Tag die Eindringtiefe bestimmt im Verhältnis zur gesamten Sedimenthöhe. Sedimentvolumen, Eindringtiefe sind ein Maß für die Festigkeit des Sediments und verhalten sich umgekehrt wie diese.

### b) Spatelprobe

Die Wiederaufrührbarkeit der Bodensätze in den pigmentierten Druckfarben bzw. Dispersionslacken wird mit Hilfe der Spatelprobe bestimmt. Bei der Aufrührbarkeit gibt es die Abstufungen sehr gut, gut, mittel, schwer und sehr schwer. Die Festigkeit der Bodensätze wird charakterisiert mit sehr hart, hart, mittel, weich und sehr weich.

Die beschichteten Pigmentpräparationen werden in eine große Anzahl von Verschnittsystemen bekannter Druckfarbenhersteller sowie in mehrere Dispersionslacke eingearbeitet, mit denen die Präparationen ausnahmslos verträglich sind.

Die Pigmentkonzentration beträgt dabei jeweils 30 Gew.% bei den Druckfarben bzw. 20 Gew.% bei den Dispersionslacken, jeweils vor der Verdünnung (17 sec DIN 4 Becher bei Druckfarben, 35 sec DIN 4 Becher bei Dispersionslacken).

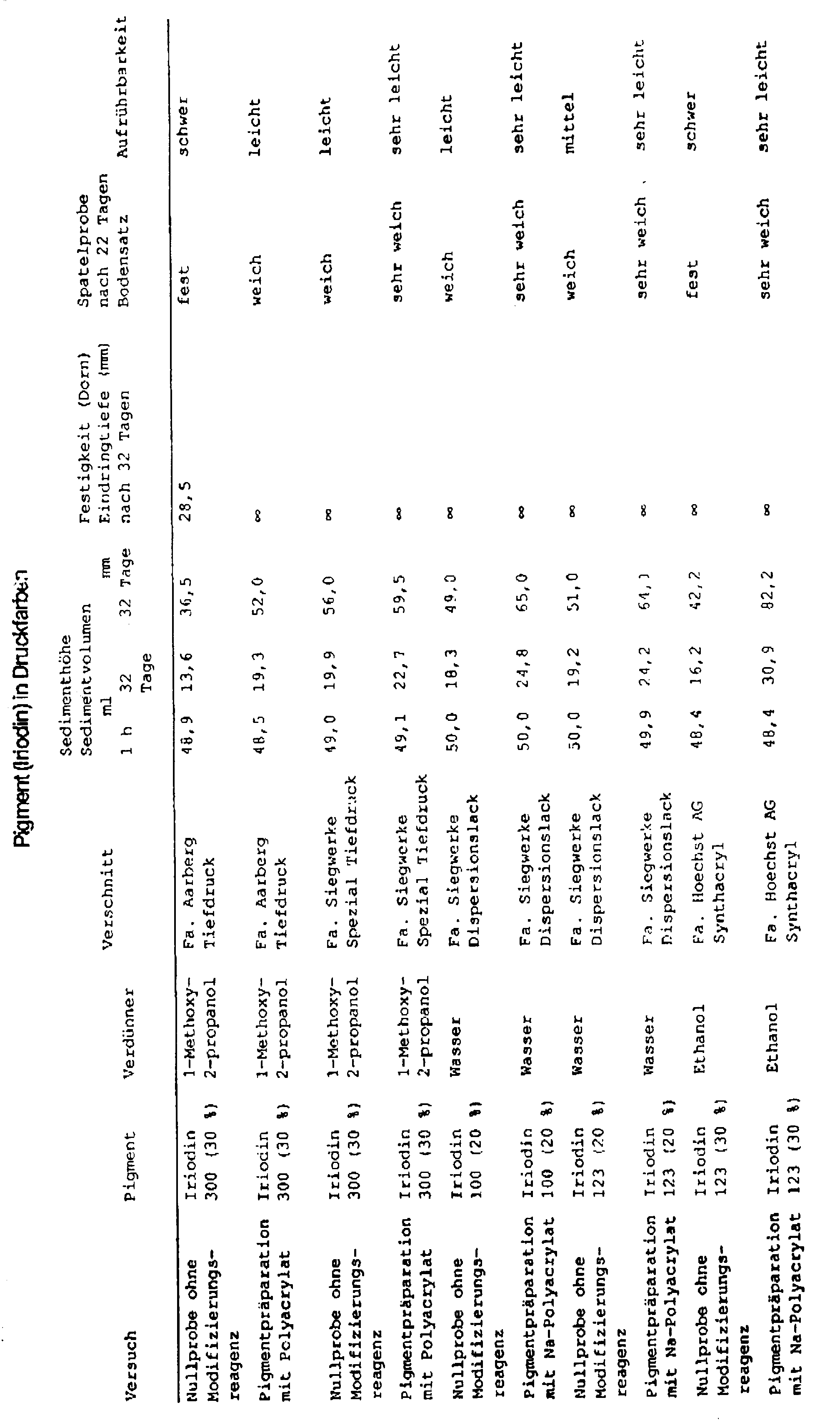

## Patentansprüche

1. Oberflächenmodifizierte plättchenförmige Pigmente, die zur Verbesserung des Aufrührverhaltens mit einem Modifizierungsreagenz bestehend aus einem Polyacrylat oder Polymethacrylat bzw. deren wasserlöslichen Salze und gegebenenfalls mit einem Lösungsmittel beschichtet sind.

2. Oberflächenmodifizierte plättchenförmige Pigmente nach Anspruch 1, dadurch gekennzeichnet, daß die plättchenförmigen Pigmente Perlglanzpigmente sind.

3. Oberflächenmodifizierte plättchenförmige Pigmente nach Anspruch 1, dadurch gekennzeichnet, daß das Modifizierungsreagenz zusätzlich ein Lösemittel bzw. Lösemittelgemisch enthält.

4. Verfahren zur Herstellung oberflächenmodifizierter plättchenförmiger Pigmente nach Anspruch 1, dadurch gekennzeichnet, daß man in einem Mischgefäß plättchenförmige Pigmente mit dem Modifizierungsreagenz bestehend aus einem Polyacrylat und gegebenenfalls einem Lösemittel bzw. Lösemittelgemisch versetzt.

5. Verfahren nach Anspruch 4, dadurch gekennzeichnet, daß das Polyacrylat oder Polymethacrylat bzw. deren wasserlöslichen Salze ein Molekulargewicht zwischen 100 und 100 000 aufweist.

6. Verfahren nach Anspruch 4, dadurch gekennzeichnet, daß als Lösemittel aromatische Lösemittel, Alkohole, Ester, Alkylacetate, Wasser sowie deren Mischungen verwendet werden.

7. Verwendung der Pigmente nach Anspruch 1 in Formulierungen wie Farben, Lacken, Druckfarben und zur Kosmetikpräparation.

8. Formulierungen enthaltend Pigmente nach Anspruch 1.

## Claims

1. Surface-modified platelet-shaped pigments coated with a modifying reagent comprising a polyacrylate or polymethacrylate or water-soluble salts thereof and optionally with a solvent in order to improve redispersibility.

2. Surface-modified platelet-shaped pigments according to Claim 1, characterised in that the platelet-shaped pigments are pearl lustre pigments.

3. Surface-modified platelet-shaped pigments according to Claim 1, characterised in that the modifying reagent additionally includes a solvent or solvent mixture.

4. Process for the preparation of surface-modified platelet-shaped pigments according to Claim 1, characterised in that the modifying reagent comprising a polyacrylate and optionally a solvent or solvent mixture is added in a mixing vessel to platelet-shaped pigments.

5. Process according to Claim 4, characterised in that the polyacrylate or polymethacrylate or water-soluble salts thereof have a molecular weight between 100 and 100,000.

6. Process according to Claim 4, characterised in that the solvents used are aromatic solvents, alcohols, esters, alkyl acetates, water and mixtures thereof.

7. Use of the pigments according to Claim 1 in formulations such as paints, varnishes, printing inks and for the preparation of cosmetics.

8. Formulations comprising pigments according to Claim 1.

## Revendications

1. Pigments en forme de paillettes à surface modifiée, qui pour améliorer leur comportement de mélange sont recouverts d'un réactif modificateur constitué d'un polyacrylate ou polyméthacrylate ou d'un de leurs sels solubles dans l'eau et le cas échéant d'un solvant.

2. Pigments en forme de paillettes à surface modifiée selon la revendication 1, caractérisés en ce que les pigments en forme de paillettes sont des pigments à lustre nacré.

3. Pigments en forme de paillettes à surface modifiée selon la revendication 1, caractérisés en ce que le réactif modificateur contient en outre un solvant ou un mélange de solvants.

4. Procédé de préparation de pigments en forme de paillettes à surface modifiée selon la revendication 1, caractérisé en ce qu'on mélange dans un récipient mélangeur des pigments en forme de paillettes avec le réactif modificateur constitué d'un polyacrylate et le cas échéant un solvant ou un mélange de solvants.

5. Procédé selon la revendication 4, caractérisé en ce que le polyacrylate ou polyméthacrylate, ou leurs sels solubles dans l'eau, présente(nt) un poids moléculaire compris entre 100 et 100 000.

6. Procédé selon la revendication 4, caractérisé en ce qu'on utilise comme solvant des solvants aromatiques, des alcools, des esters, des acétates d'alkyle, de l'eau ainsi que leurs mélanges.

7. Application des pigments selon la revendication 1 dans des formulations comme les colorants, les vernis, les encres d'imprimerie, et pour la préparation de cosmétiques.

8. Formulations contenant des pigments selon la revendication 1.
